# FASCICULE DE BREVET EUROPEEN

(11) **EP 3 351 007 B1**
(45) Date de publication et mention de la délivrance du brevet: **27.10.2021**
(21) Numéro de dépôt: 16769958.6
(22) Date de dépôt: 16.09.2016
(51) Int. Cl.: G02B 27/01, H04N 21/414, H04N 21/488, G06F 3/01

(54) **PROCÉDÉ DE VISUALISATION DE DONNÉES RELATIVES À UN ÉVÉNEMENT ET SYSTÈME ASSOCIÉ**
VERFAHREN ZUM ANZEIGEN VON DATEN IM ZUSAMMENHANG MIT EINEM EREIGNIS UND ZUGEHÖRIGES SYSTEM
METHOD FOR DISPLAYING DATA RELATING TO AN EVENT AND ASSOCIATED SYSTEM

(30) Priorité: 16.09.2015 FR 1558693
(43) Date de publication de la demande: 25.07.2018
(73) Titulaire: Opera Touch SL, 20005 San Sebastian (ES)
(72) Inventeur: ZATARAIN, Xavier, 75005 Paris (FR)
(74) Mandataire: Regimbeau
(86) Numéro de dépôt international: PCT/EP2016/072008
(87) Numéro de publication internationale: WO 2017/046348

(56) Documents cités:
- EP-A1- 2 378 347
- US-A1- 2011 050 727
- Thomas Rhodes ET AL: "Performing Arts in the Wearable Age", , 1 juin 2014 (2014-06-01), XP055265263, Extrait de l'Internet: URL:https://static1.squarespace.com/static /51d98be2e4b05a25fc200cbc/t/53b0521de4b09f 75e9f10b74/1404064285388/ThomasRhodesSamue lAllen_PerformingArtsInTheWearableAge_6.6. 2014.pdf [extrait le 2016-04-14]

## Description

### DOMAINE TECHNIQUE

Il est question du domaine technique de la visualisation de données relatives à un événement par un spectateur.

### ETAT DE LA TECHNIQUE

On connait différentes techniques pour permettre à un spectateur de visualiser pendant un événement des données relatives à cet événement.

Par exemple, lorsque l'événement est un spectacle où des personnes s'expriment dans une langue, par exemple en chantant ou en parlant, comme un opéra, les données à visualiser peuvent être des traductions de ce qui est dit.

Ces traductions peuvent être imprimées sur un document, tel qu'un livret. Cependant ceci pose plusieurs problèmes. Tout d'abord le spectateur ne peut pas regarder en même temps le livret et le spectacle qui a lieu. Le spectateur doit alterner entre l'émotion de la scène et l'aspect intellectuel de la lecture. En outre, ceci nécessite de bouger régulièrement la tête et d'adapter sa vision entre un élément proche et un élément plus lointain, d'où un effort physique répété qui peut provoquer à terme de la fatigue et des douleurs musculaire.

Dans certains lieux, par exemple certains opéras, un écran a été installé au-dessus de la scène, de sorte à afficher des surtitres. Si le texte et la scène sont alors plus proches, il reste difficile pour le spectateur de regarder en même temps les surtitres et la scène en-dessous, et les inconvénients décrits ci-dessus subsistent. En outre, le spectateur doit avoir une visibilité suffisante pour voir à la fois les surtitres et la scène, ce qui peut être compliqué voire impossible depuis certaines places de certaines salles de spectacle.

D'autres lieux présentent plusieurs écrans disposés dans le lieu.

Des écrans sont par exemples installés dans différentes travées, et/ou un écran est incrusté dans le dossier du siège devant celui dans lequel le spectateur est assis. Ceci garantit au spectateur de pouvoir visualiser la traduction. Cependant le spectateur ne peut pas regarder en même temps les surtitres et la scène et les inconvénients cités précédemment perdurent.

Les documents US2011/0050727 A1 et EP2378347 A1 décrivent chacun un dispositif de visualisation porté par un spectateur et comportant un écran. Le dispositif peut être utilisé pour afficher par exemple des descriptions relatives à un objet physique d'un événement tel qu'un spectacle à un moment propice de l'événement, par exemple suite à une manipulation de l'utilisateur, ou sous le contrôle d'un ordinateur ou similaire sur la base d'une chronologie prédéterminée ou l'état d'avancement du spectacle. Le dispositif permet un affichage à une distance virtuelle basée sur la distance mesurée entre le spectateur et l'objet concerné. Le document EP2378347 A1 décrit par ailleurs la possibilité pour l'utilisateur de contrôler, par exemple au travers de boutons, la position du contenu virtuel affiché et éviter ainsi de bloquer la vue de l'objet.

### PRESENTATION

Un but de l'invention est de pallier au moins un des inconvénients présentés ci-avant.

A cet effet, l'invention prévoit un procédé de visualisation de données relatives à un événement par au moins un spectateur conformément à la revendication indépendante 1.

Il est ainsi possible de ramener la visualisation de l'événement et l'affichage des données dans le champ de vision du spectateur. Il en résulte une meilleure expérience du spectacle car le spectateur peut profiter de l'événement auquel il assiste en même temps qu'il visualise les données associées, et car il n'a plus besoin de réaliser des efforts physiques durant l'événement dans ce domaine.

Des modes particulièrement avantageux de réalisation du procédé sont définis par les revendications dépendantes.

L'invention concerne également un système de visualisation de données relatives à un événement par au moins un spectateur, le système étant configuré pour mettre en oeuvre le procédé ainsi défini.

L'invention concerne également des moyens de stockage lisibles par un équipement informatique sur lesquels un produit programme d'ordinateur comprend des instructions de code pour l'exécution d'un procédé ainsi défini.

### DESSINS

D'autres objectifs, caractéristiques et avantages apparaitront à la lecture de la description qui suit donnée à titre illustratif et non limitatif en référence aux dessins, parmi lesquels :
- la figure 1 représente schématiquement un système selon un exemple de mode de réalisation de l'invention,
- la figure 2 représente schématiquement une partie du champ de vision du spectateur selon un autre exemple de mode de réalisation de l'invention,
- les figures 3A à 3C représentent schématiquement une partie du champ de vision du spectateur selon un autre exemple de mode de réalisation de l'invention,
- la figure 4 représente schématiquement un procédé selon un exemple de mode de réalisation de l'invention,
- les figures 5 à 9 représentent des exemples de mode de réalisation du procédé de la figure 4.

### DESCRIPTION

### Structure générale du système

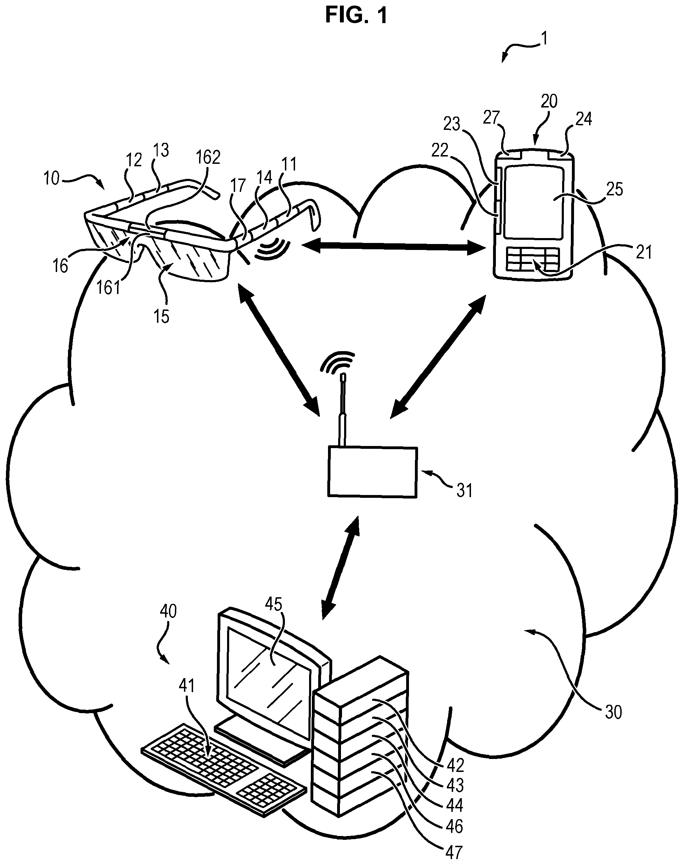

En référence à la figure 1, il est décrit un système. Le système 1 est par un système de visualisation de données par au moins un spectateur, relatives à un événement.

Le système 1 est configuré pour mettre en œuvre le procédé tel que décrit ci-après.

Par événement on entend une performance physique à laquelle un ou plusieurs spectateurs assistent, l'événement ayant lieu dans un endroit déterminé tel qu'une salle, un stade, etc. L'événement est audiovisuel (l'utilisateur le regarde depuis une point de vue donné tel qu'un siège), en particulier sonore et visuel, c'est-à-dire qu'il implique la production d'un contenu sonore et/ou visuel auquel le spectateur a accès alors qu'il assiste à l'événement dans l'endroit, directement en regardant et en écoutant ce qui se passe dans l'endroit.

Par événement, on entendra notamment un concert, un opéra, une pièce de théâtre, un spectacle, etc.

Le contenu sonore et/ou le contenu visuel est par exemple produit par une ou plusieurs personne(s). Le contenu visuel est par exemple produit au moins en partie par une ou plusieurs personne(s) agissant dans un espace visible pour le spectateur, tels que des artistes sur scène. Le contenu sonore est par exemple produit au moins en partie par la ou les personne(s) produisant le contenu visuel (ou d'autres, par exemple un orchestre). Le contenu sonore est par exemple produit au moins en partie par une ou plusieurs personne(s) en émettant des sons à l'aide de leur corps, par exemple au moyen de la voix ou par le biais d'un appareil tel qu'un instrument de musique.

L'événement comprend plusieurs moments successifs prédéterminés, c'est-à-dire qu'il a une structure prédéterminée qui est suivie lorsque l'événement est réalisé et qui peut donc être suivie. L'événement est par exemple un morceau de musique dont le contenu est prédéterminé jusqu'à un certain point par sa partition. L'événement est par exemple un opéra, qui peut donc être considéré comme une suite d'actes, au cours desquels du contenu sonore correspondant à une partition est émis, les chants et les discours des personnages étant prédéterminés, de même que leurs actions.

L'événement est par exemple un spectacle. L'événement est par exemple réalisé au moins en partie au niveau d'un espace scénique, c'est-à-dire un espace prédéterminé comme étant celui où une ou plusieurs personne(s) produisent un contenu visuel propre à l'événement. L'espace scénique est par exemple une scène, par exemple la scène d'un théâtre ou d'un opéra ou d'une salle de concert.

Le système comprend des moyens de stockage dans lequel sont stockés un ensemble de contenus visuels. Chaque contenu visuel est associé à un desdits moments successifs de l'événement. Les contenus visuels comprennent par exemple des éléments textuels, par exemple à des textes à afficher. Les textes sont par exemple ceux qui sont dits par une ou plusieurs personne(s) durant l'un des moments de l'événement. Les contenus visuels comprennent par exemple des partitions de musique, ou toute autre représentation de sons produits durant l'un des moments de l'événement.

Le système 1 comprend au moins un dispositif de visualisation 10 tel que décrit ci-après, par exemple une pluralité de dispositifs de visualisation 10, par exemple au moins deux, par exemple au moins trois, par exemple au moins dix, par exemple au moins vingt dispositifs de visualisation 10.

Le système comprend des moyens de traitement de données (qui comme l'on va voir peuvent être ou non intégrés au(x) dispositif(s) de visualisation 10), tel qu'un processeur, adaptés pour mettre en oeuvre un procédé tel que décrit ci-après, par exemple configuré(s) pour mettre en oeuvre un tel procédé.

### Dispositif de visualisation

Le dispositif de visualisation 10 est adapté pour être porté par un spectateur. Le dispositif de visualisation 10 comprend par exemple des moyens pour être maintenu en place au niveau de la tête du spectateur. Le dispositif de visualisation 10 comprend par exemple une structure de lunette adaptée pour être maintenue au niveau des oreilles et/ou du nez du spectateur. Le dispositif de visualisation 10 comprend par exemple une structure de casque adaptée pour être posée sur la tête du spectateur.

Le dispositif de visualisation 10 est équipé d'un écran 15 au moins partiellement transparent (i.e. suffisamment transparent pour voir l'événement à travers). L'écran 15 comprend par exemple un ou plusieurs verre(s) de lunettes et/ou comprend une visière. L'écran 15 a par exemple une transparence variable. L'écran 15 est par exemple un écran facial, le dispositif de visualisation 10 étant adapté de sorte que, lorsque le dispositif de visualisation 10 est porté par le spectateur, l'écran 15 est disposé au moins partiellement devant les yeux du spectateur, de sorte à former un écran entre les yeux du spectateur et l'espace scénique lorsque le spectateur regarde l'espace scénique.

Le dispositif de visualisation 10 est adapté pour afficher des données sur l'écran 15. Les données peuvent par exemple être affichées de manière lumineuse. Le dispositif de visualisation 10 peut comprendre des moyens de réglage des paramètres d'affichage de l'écran 15 et/ou les paramètres d'affichage peuvent être bloqués dans une configuration donnée. Le dispositif de visualisation 10 peut être ainsi configuré pour créer une réalité augmentée, par exemple en affichant un ou plusieurs contenu(s) visuel(s) associé(s) à un moment en cours de l'événement. En outre, un tel dispositif de visualisation 10 permet une meilleure immersion du spectateur.

L'affichage sur l'écran 15 est par exemple réalisé par un projecteur du dispositif de visualisation 10, et/ou par hologramme, et/ou par un écran de type LCD transparent, et/ou à cristaux liquides pouvant devenir localement opaque sous l'effet d'un courant électrique.

Le dispositif de visualisation 10 est adapté pour afficher des données sur l'écran 15 selon un affichage polychrome ou monochrome.

Les données peuvent être affichées sur une partie spécifique de l'écran 15, par exemple le haut de l'écran et/ou le bas de l'écran. La zone d'affichage sur l'écran peut par exemple être modifiable, de sorte à permettre au spectateur de choisir la zone au niveau de laquelle il souhaite que l'affichage soit réalisé.

Le dispositif de visualisation 10 peut comprendre une interface d'entrée/sortie, par exemple une interface homme/machine, par exemple un ou plusieurs actionneur(s), par exemple un clavier, par exemple une interface tactile. L'interface d'entrée/sortie comprend par exemple un capteur 11, par exemple un capteur tactile, par exemple au moins un actionneur tel qu'un bouton, par exemple une pluralité d'actionneurs, par exemple un clavier. Alternativement ou en complément, l'interface d'entrée/sortie peut comprendre un écran tactile.

Le dispositif de visualisation 10 peut comprendre des moyens de stockage de données 12. Les moyens de stockage de données 12 comprennent par exemple une mémoire, notamment de type flash.

Le dispositif de visualisation 10 peut comprendre des moyens de traitement de données 13. Les moyens de traitement de données 13 comprennent par exemple un processeur.

Le dispositif de visualisation 10 peut comprendre des moyens de communication 14, par exemple des moyens de communication 14 avec ou sans fil, par exemple des moyens de communication 14 avec un dispositif de contrôle 20 et/ou un terminal de commande 40 tels que décrits ci-après. Les moyens de communication 14 avec le dispositif de contrôle 20 sont par exemple adaptés pour mettre en oeuvre une communication de type Bluetooth ou WiFi.

Le dispositif de visualisation 10 peut comprendre au moins un capteur optique 16, par exemple de type caméra. Le dispositif de visualisation 10 peut ainsi comprendre un capteur optique avant 161 adapté pour être tourné vers l'avant. Par avant, on entend sensiblement dans la direction vers laquelle est tourné(e) la tête ou le regard du spectateur. Le dispositif de visualisation 10 peut ainsi comprendre un capteur optique arrière 162 adapté pour être tourné vers l'arrière. Par arrière on entend sensiblement dans la direction opposée à celle vers laquelle est tourné(e) la tête ou le regard du spectateur, c'est-à-dire en direction du spectateur. En particulier, le capteur optique arrière 162 peut être adapté pour former un oculomètre, c'est-à-dire qu'il est configuré pour mesurer les mouvements des yeux. Le capteur optique avant 161 et/ou le capteur optique arrière 162 peut présenter une direction modifiable par rapport à la structure du dispositif de visualisation 10.

Le dispositif de visualisation 10 peut comprendre au moins un capteur sonore 17.

Le dispositif de visualisation 10 peut être configuré pour transmettre son niveau de batterie, par exemple à un réseau local 30 tel que décrit ci-après. La transmission peut être périodique, ou déclenchée lorsque le niveau de batterie est détecté par le dispositif de visualisation 10 comme inférieur à un seuil prédéterminé, par exemple 20% de batterie. Il est ainsi possible de proposer au spectateur un remplacement au moment d'une pause.

Le dispositif de visualisation 10 est par exemple une paire de lunettes intelligentes, par exemple des SmartEyeGlass de Sony, par exemple des Moverio BT-200 d'Epson, par exemple ORA-1 d'Optinvent, par exemple Google Glass de Google, ou tout autre type de paire de lunettes intelligentes équivalent, configuré pour présenter les caractéristiques décrites.

### Dispositif de contrôle

Le système peut comprendre au moins un dispositif de contrôle 20. Le système peut comprendre un dispositif de contrôle 20 pour chaque dispositif de visualisation 10.

Chaque dispositif de contrôle 20 est adapté à être associé à un dispositif de visualisation 10 tel que décrit ci-avant. En particulier, chaque dispositif de contrôle 20 peut être associé à un dispositif de visualisation, l'association pouvant être univoque, c'est-à-dire que chaque dispositif de contrôle 20 est associé à un unique dispositif de visualisation 10, chaque dispositif de visualisation 10 étant associé à au plus un dispositif de contrôle 20.

Le dispositif de contrôle 20 peut comprendre une interface d'entrée/sortie, par exemple une interface homme/machine, par exemple un ou plusieurs actionneur(s), par exemple un clavier, par exemple une interface tactile. L'interface d'entrée/sortie comprend par exemple un capteur 21, par exemple un capteur tactile, par exemple au moins un actionneur tel qu'un bouton, par exemple une pluralité d'actionneurs, par exemple un clavier. Alternativement ou en complément, l'interface d'entrée/sortie peut comprendre un écran tactile 25.

Le dispositif de contrôle 20 peut comprendre des moyens de stockage de données 22. Les moyens de stockage de données 22 comprennent par exemple une mémoire.

Le dispositif de contrôle 20 peut comprendre des moyens de traitement de données 23. Les moyens de traitement de données 23 comprennent par exemple un processeur.

Le dispositif de contrôle 20 peut être adapté pour détecter un signal d'entrée issu de l'interface d'entrée/sortie.

Le dispositif de contrôle 20 peut comprendre des moyens de communication 24, par exemple des moyens de communication 24 avec ou sans fil, par exemple des moyens de communication 24 avec un dispositif de visualisation 10 tel que décrit ci-avant et/ou un terminal de commande 40 tel que décrit ci-après. Les moyens de communication 24 avec le dispositif de visualisation 10 sont par exemple adaptés pour mettre en oeuvre une communication de type Bluetooth.

Le dispositif de contrôle 20 peut comprendre des moyens d'affichage 25, par exemple un écran, par exemple un écran tactile. Les moyens d'affichage 25 peuvent faire partie de l'interface d'entrée/sortie du dispositif de contrôle 20 ou en être distincts. Les moyens d'affichage 25 peuvent être lumineux. Le dispositif de contrôle 20 peut comprendre des moyens de réglage des paramètres d'affichage des moyens d'affichage 25 et/ou les paramètres d'affichage peuvent être bloqués dans une configuration donnée.

Le dispositif de contrôle 20 peut comprendre au moins un capteur sonore 27.

Le dispositif de contrôle 20 peut être configuré pour transmettre son niveau de batterie, par exemple à un réseau local 30 tel que décrit ci-après. La transmission peut être périodique, ou déclenchée lorsque le niveau de batterie est détecté par le dispositif de contrôle 20 comme inférieur à un seuil prédéterminé, par exemple 20% de batterie. Il est ainsi possible de proposer au spectateur un remplacement au moment d'une pause.

Le dispositif de contrôle 20 est par exemple un terminal mobile de type smartphone ou tablette tactile configuré pour présenter les caractéristiques décrites ici. Le dispositif de contrôle 20 comprend par exemple une application dédiée.

Le dispositif de contrôle 20 peut comprendre des moyens de chargement pour former une source d'alimentation en énergie pour le dispositif de visualisation 10. Les moyens de chargement sont par exemple filaires, par exemple de sorte à permettre de recharger le dispositif de visualisation 10 pendant l'événement ou lors d'une pause, par exemple d'un entracte. Les moyens de chargement sont par exemple sans fil, ce qui permet un rechargement plus aisé pour le spectateur au cours de l'événement.

### Terminal de commande

Le système peut comprendre un terminal de commande 40.

Le terminal de commande 40 est par exemple un ordinateur.

Le terminal de commande 40 peut comprendre une interface d'entrée/sortie, par exemple une interface homme/machine, par exemple un ou plusieurs actionneur(s), par exemple un clavier, par exemple une interface tactile. L'interface d'entrée/sortie comprend par exemple un capteur 41, par exemple un capteur tactile, par exemple au moins un actionneur tel qu'un bouton, par exemple une pluralité d'actionneurs, par exemple un clavier. Alternativement ou en complément, l'interface d'entrée/sortie peut comprendre un écran tactile.

Le terminal de commande 40 peut comprendre des moyens de stockage de données 42. Les moyens de stockage de données 42 comprennent par exemple une mémoire.

Le terminal de commande 40 peut comprendre des moyens de traitement de données 43. Les moyens de traitement de données 43 comprennent par exemple un processeur.

Le terminal de commande 40 peut être adapté pour détecter un signal d'entrée issu de l'interface d'entrée/sortie 41.

Le terminal de commande 40 peut comprendre des moyens de communication 44, par exemple des moyens de communication 44 avec ou sans fil, par exemple des moyens de communication 44 avec un dispositif de visualisation 10 et/ou un dispositif de contrôle 20 tels que décrits ci-avant.

Le terminal de commande 40 peut comprendre des moyens d'affichage 45, par exemple un écran, par exemple un écran tactile. Les moyens d'affichage 45 peuvent faire partie de l'interface d'entrée/sortie du terminal de commande 40 ou en être distincts. Les moyens d'affichage 45 peuvent être lumineux. Le terminal de commande 40 peut comprendre des moyens de réglage des paramètres d'affichage des moyens d'affichage 45 et/ou les paramètres d'affichage peuvent être bloqués dans une configuration donnée.

Le terminal de commande 40 peut comprendre au moins un capteur optique 46, par exemple de type caméra. Le terminal de commande 40 peut ainsi comprendre un capteur optique 46 adapté pour être tourné vers un espace scénique de l'événement.

Le terminal de commande 40 peut comprendre au moins un capteur sonore 47. Le capteur sonore est par exemple disposé à proximité ou au niveau d'un espace scénique de l'événement.

### Réseau local

Le dispositif de visualisation 10, et/ou le dispositif de contrôle 20, et/ou le terminal de commande 40 peuvent être connectés vis un réseau local 30 de type LAN, avantageusement sans fil.

Le réseau local 30 peut être mis en œuvre par le terminal de commande 40 (il peut par exemple être connecté directement à chaque autre équipement 10, 20 via une connexion sans fil directe telle qu'en Bluetooth) ou par un équipement dédié tel qu'un routeur 31 auquel le dispositif de visualisation 10, et/ou le dispositif de contrôle 20, et/ou le terminal de commande 40 sont par exemple connectés soit via le réseau local 30 sans fil (le routeur 31 peut par exemple être une borne WiFi), soit via une connectique filaire tel qu'un câble Ethernet.

### Ensemble de contenus visuels

Les contenus visuels comprennent par exemple un texte et/ou une image à afficher.

Les contenus visuels comprennent par exemple des paroles (en une ou plusieurs langues) à afficher. Les contenus visuels comprennent par exemple une partition de musique à afficher. Les contenus visuels comprennent par exemple un élément de décor à afficher. Les contenus visuels comprennent par exemple une séquence vidéo, par exemple une séquence vidéo d'un acteur. Les contenus visuels comprennent par exemple des éléments à afficher sur le ou les acteurs présents lors du moment associé. Les contenus visuels comprennent par exemple des éléments à afficher sur le moment associé, par exemple des éléments de scénario ou techniques.

L'ensemble de contenus visuels peut comprendre un ensemble de fichiers, par exemple un ensemble de fichiers image, par exemple de type png, par exemple au format adapté pour être affiché sur l'écran 15 du dispositif de visualisation 10, par exemple de sorte à s'étendre sur toute la largeur de l'écran 15, par exemple d'une hauteur de plusieurs pixels, par exemple supérieure à 20 pixels, par exemple supérieure à 50 pixels.

### Produit programme d'ordinateur

Un produit programme d'ordinateur comprend des instructions de code pour l'exécution du procédé décrit ci-après, ainsi que des moyens de stockage lisibles par un équipement informatique (notamment des moyens de stockage, notamment une mémoire, par exemple les moyens de stockage 12, 22 ou 42) lesquels on trouve ce produit programme d'ordinateur.

### Procédé

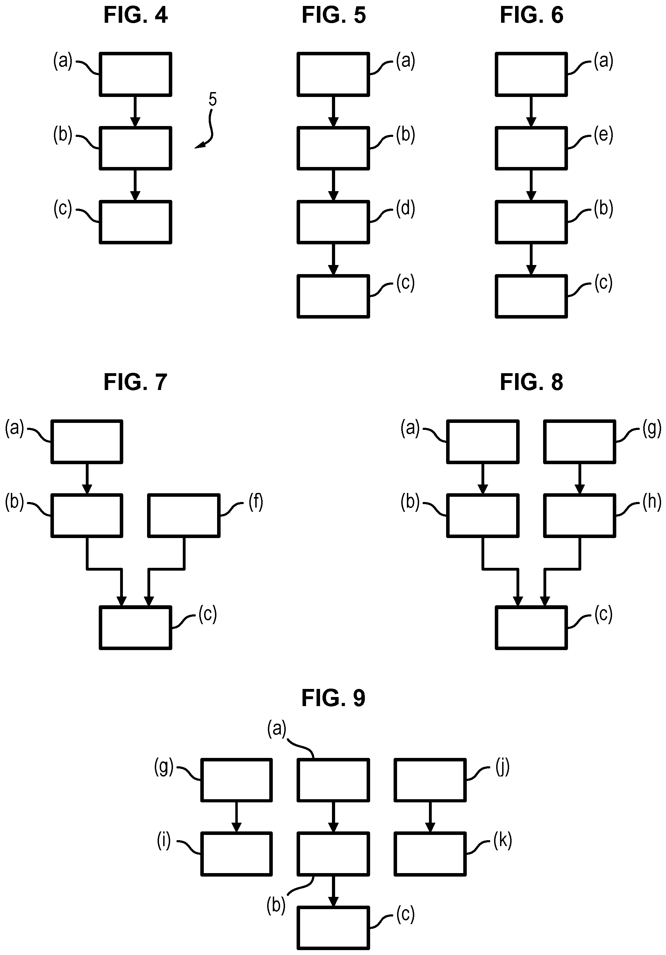

En référence à la figure 4, il est décrit un procédé. Le procédé 5 est un procédé de visualisation de données par au moins un spectateur, relatives à un événement. L'événement comprend plusieurs moments successifs prédéterminés.

Un ensemble de contenus visuels chacun associé à un desdits moments successifs est stocké dans des moyens de stockage de données du système 1 (en pratique ceux 12 des dispositifs de visualisation 10 et/ou ceux 22 du dispositif de contrôle 20 et/ou ceux 42 du terminal de commande 40).

Le procédé 5 comprend la mise en oeuvre par des moyens de traitement de données du système 1 (en pratique ceux 13 des dispositifs de visualisation 10 et/ou ceux 23 du dispositif de contrôle 20 et/ou ceux 43 du terminal de commande 40) d'une pluralité d'étapes, dont au moins celles définies dans la revendication 1.

Le procédé est par exemple mis en oeuvre par le système tel que décrit ci-avant.

### Détermination du moment en cours

Le procédé comprend une étape (a) de détermination d'un moment en cours. Il est ainsi possible de connaître le moment de l'événement ayant lieu à un instant donné, par exemple à des intervalles de temps donnés, par exemple en temps réel.

L'étape (a) est par exemple mise en œuvre par les moyens de traitement de données 13 du dispositif de visualisation, et/ou par les moyens de traitement de données 23 des moyens de communication, et/ou par les moyens de traitement de données 43 du terminal de commande.

La détermination peut résulter d'une mesure réalisée par des moyens de mesure. Dans ce cas, le procédé peut comprendre une étape de réception d'un signal d'entrée issu de moyens de mesures. Les moyens de mesures comprennent par exemple au moins l'un des capteurs sonores 17, 27 et/ou 47 du dispositif de visualisation, du dispositif de contrôle et/ou du terminal de communication. Les moyens de mesures comprennent par exemple au moins l'un des capteurs optiques 16, 161, 162 et/ou 46 du dispositif de visualisation et/ou du terminal de commande. La détermination peut alors être réalisée en fonction du signal d'entrée ainsi mesuré. En particulier, l'étape (a) peut comprendre une étape de reconnaissance du signal d'entrée, par exemple par comparaison avec un signal de référence. Il est ainsi possible de comparer un signal sonore reçu avec plusieurs signaux de référence, chacun associé à un moment de l'événement, de sorte à déterminer le signal de référence le plus proche du signal sonore et donc de déterminer le moment associé.

La détermination peut résulter d'une entrée réalisée par un opérateur. Une personne peut en effet suivre l'événement et indiquer au système le moment en cours, par exemple en fournissant au système un signal d'entrée caractéristique du moment en cours, par exemple via l'une des interfaces d'entrée/sortie 11, 21 et/ou 41. L'opérateur peut par exemple fournir un signal d'entrée au terminal de commande 40, par exemple via l'interface d'entrée/sortie 41. Le signal d'entrée est par exemple une valeur ou un identifiant propre au moment à identifier. Alternativement le signal d'entrée peut être un signal d'incrémentation, indiquant le passage au moment suivant, dans quel cas la détermination est mise en oeuvre de manière itérative.

### Identification de contenu

Le procédé comprend une étape (b) d'identification dans ledit ensemble de l'au moins un contenu visuel associé au moment en cours, par exemple des contenus visuels associés au moment en cours. Il est ainsi possible de connaître quels contenus afficher en fonction du moment de l'événement.

L'étape (b) est par exemple mise en oeuvre par les moyens de traitement de données 13 du dispositif de visualisation, et/ou par les moyens de traitement de données 23 des moyens de communication, et/ou par les moyens de traitement de données 43 du terminal de commande.

Le résultat de l'étape (a) peut être transmis au préalable aux moyens de traitement de données mettant en œuvre l'étape (b).

L'ensemble de contenus visuels a par exemple une structure de base de données, par exemple dans laquelle chaque moment de l'événement est associé à un ou plusieurs contenu(s) visuel(s). L'étape (b) peut alors comprendre l'extraction de la base de données du ou des contenu(s) visuel(s) associé(s) au moment déterminé.

Alternativement, l'ensemble de contenus visuels a par exemple une structure de liste(s) ordonnée(s). La détermination du moment en cours peut alors permettre de fournir un numéro du moment identifiant de manière univoque ledit moment parmi les moments de l'événement pour la mise en oeuvre de l'étape (b). La détermination du moment peut comprendre un signal d'incrémentation, de sorte que l'identification des contenus associés comprend l'identification du ou des contenu(s) suivant(s) de chaque liste par rapport au(x) dernier(s) contenu(s) identifié(s). Une telle détermination comprend par exemple une initiation pour le premier contenu à identifier, par exemple mise en oeuvre de sorte que lorsqu'aucun contenu n'a encore été identifié, le(s) premier(s) contenu de chaque liste est identifié.

L'au moins un contenu visuel comprend par exemple au moins un contenu destiné à être lu par le spectateur, par exemple plusieurs tels contenus, c'est-à-dire des contenus écrits représentatifs du moment de l'événement déterminé. L'au moins un contenu visuel comprend par exemple des textes à afficher, par exemple le texte prononcé et/ou les notes de musiques jouées lors du moment déterminé ou du moment suivant.

### Affichage de contenu identifié

Le procédé comprend une étape (c) d'affichage par ledit écran du dispositif de visualisation dudit au moins un contenu visuel identifié, par exemples desdits contenus visuels identifiés. Du fait de l'affichage sur l'écran qui est transparent et porté par le spectateur, il est ainsi possible pour le spectateur de visualiser durant l'événement des éléments visuels propres au moment de l'événement auquel il est en train d'assister tout en continuant à regarder l'événement en lui-même. Ceci a pour avantage de permettre au spectateur de ne pas perdre son attention ni le fil de l'événement auquel il assiste, et de vivre une expérience optimale en accédant à des informations lui permettant de mieux apprécier l'événement sans être distrait de la performance qui est réalisée devant lui. En outre, le spectateur n'a pas à bouger la tête pour voir alternativement le contenu visuel et l'événement en train d'être représenté, ce qui évite les risques pour la santé associés à de tels mouvements répétés (fatigue, douleurs musculaires, etc.). Ceci est d'autant plus vrai lorsque le spectateur est particulièrement sensible à de tels risques, par exemple lorsque le spectateur est une personne âgée. Ceci présente encore l'avantage d'être discret et de ne pas nuire aux autres spectateurs ou même à l'événement, puisque le spectateur n'a pas à bouger pour consulter le contenu.

L'étape (c) est par exemple mise en oeuvre par les moyens de traitement de données 13 du dispositif de visualisation, et/ou par les moyens de traitement de données 23 des moyens de communication, et/ou par les moyens de traitement de données 43 du terminal de commande.

Le résultat de l'étape (b) peut être transmis au préalable aux moyens de traitement de données mettant en oeuvre l'étape (c).

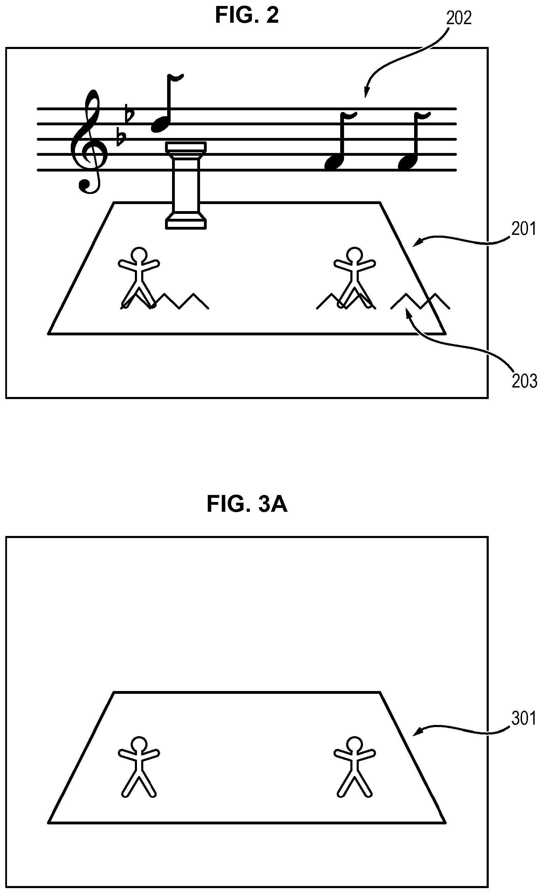

La figure 2 illustre un exemple d'une partie du champ de vision d'un spectateur portant le dispositif de visualisation 10 alors que le procédé est mis en oeuvre. L'espace scénique 201 est vu en transparence, alors que l'écran affiche des contenus 202 et 203, par exemple la partition et le texte chantés durant le moment en cours.

### Mises en œuvre des étapes (a), (b) et (c) par le dispositif de visualisation

Les étapes (a), (b) et (c) peuvent être mises en œuvre par les moyens de traitement de données 23 du dispositif de visualisation. Dans ce cas, les moyens de stockage de données dans lesquels est stocké l'ensemble de contenus visuels peuvent être les moyens de stockage de données du dispositif de visualisation.

### Transmission de contenu identifié au dispositif de visualisation

L'étape (a) peut être mise en oeuvre par les moyens de traitement de données 43 du terminal de commande.

Comme décrit ci-avant, il est ainsi possible de laisser la détermination du moment en cours au terminal de commande 40, par exemple contrôlé par un opérateur. Ceci permet de simplifier le fonctionnement du dispositif de visualisation 10, car ce dernier n'a pas à mettre en oeuvre l'étape (a) alors que ceci peut s'avérer relativement complexe, surtout depuis la position du spectateur. En outre, ceci permet également de simplifier la mise en oeuvre de l'étape (a) qui peut être réalisée depuis le terminal de commande 40.

Dans ce cas, en référence à la figure 5, l'étape (b) peut être également mise en oeuvre par les moyens de traitement de données 43 du terminal de commande. Les moyens de stockage de données dans lesquels sont stockés l'ensemble de contenus visuels peuvent alors être les moyens de stockage de données 42 du terminal de commande.

Le procédé peut comprendre en outre une étape (d) de transmission de l'au moins un contenu identifié au dispositif de visualisation 10, par exemple des contenus identifiés au dispositif de visualisation 10.

La transmission est par exemple réalisée par une communication sans fil, ce qui permet d'accroitre la maniabilité du dispositif de visualisation et simplifie la réalisation du système. En outre, ceci permet de limiter les contenus stockés sur le dispositif de visualisation 10 et ne nécessite donc pas d'étape préalable de chargement de contenus associés à l'événement.

La transmission est par exemple réalisée via un réseau local, ce qui permet de mettre en oeuvre une communication dans des endroits, tels que certaines salles de concert, où il est difficile ou impossible de capter les réseaux sans fil extérieurs. La transmission est par exemple réalisée via le réseau local 30.

### Transmission du moment déterminé au dispositif de visualisation

De même, l'étape (a) peut être mise en oeuvre par les moyens de traitement de données 43 du terminal de commande, avec les mêmes avantages et possibilités que ceux décrits ci-avant.

En référence à la figure 6, le procédé peut comprendre en outre une étape (e) de transmission du moment déterminé au dispositif de visualisation 10. L'étape (e) est par exemple mise en oeuvre postérieurement à l'étape (a) et/ou antérieurement à l'étape (b).

Dans ce cas, l'étape (b) peut être mise en oeuvre par les moyens de traitement de données 13 du dispositif de visualisation, et/ou l'ensemble de contenus peut être stocké dans les moyens de stockage 11 du dispositif de visualisation. Il est ainsi possible de limiter la quantité de données échangées entre le terminal de commande 40 et le dispositif de visualisation 10, car il est suffisant de transmettre de quoi identifier le moment en cours sans avoir besoin de transmettre tous les contenus associés. En outre, ceci permet d'améliorer la réactivité du système car la transmission de données peut être réalisée de manière rapide et efficace, les données les plus coûteuses étant déjà présente dans le dispositif de visualisation 10.

De même, la transmission est par exemple réalisée via un réseau local, ce qui permet de mettre en oeuvre une communication dans des endroits, tels que certaines salles de concert, où il est difficile ou impossible de capter les réseaux sans fil extérieurs. La transmission est par exemple réalisée via le réseau local 30.

### Détermination de position relative

En référence à la figure 7, le procédé comprend en outre une étape (f) de détermination de la position relative d'une part d'un espace scénique où se déroule l'événement ou d'un élément de l'espace scénique ou présent dans l'espace scénique, et d'autre part du dispositif de visualisation. Il est ainsi possible de connaître la position de l'espace scénique, en particulier de la scène et d'adapter l'affichage de l'écran 15 en conséquence.

Une telle étape est répétée à une fréquence donnée, par exemple de l'ordre de plusieurs Hz, par exemple supérieure à 10 Hz, par exemple supérieure à 15 Hz, par exemple supérieure à 20 Hz. Il est ainsi possible de suivre la position de l'espace scénique, en particulier de la scène, par exemple en temps réel.

L'étape (c) est mise en oeuvre de telle sorte que l'au moins un contenu visuel identifié, par exemple les contenus visuels identifiés, est ou sont affiché(s) sur l'écran 15 en fonction de la position relative déterminée. Il est ainsi possible de réaliser un affichage qui se déplace en fonction des mouvements du spectateur.

L'étape (c) peut être mise en oeuvre de telle sorte qu'au moins un, par exemple plusieurs, de l'au moins un contenu visuel identifié, par exemples des contenus visuels identifiés, est affiché sur l'écran 15 de manière fixe par rapport à la scène dans le référentiel associé au spectateur. Il est ainsi possible d'afficher des contenus participant de manière efficace à la réalisation de l'événement. L'au moins un contenu ainsi affiché comprend par exemple un élément de décors, par exemple des éléments de décors. Ceci permet par exemple de diminuer les coûts associés aux décors en réalisant au moins une partie des éléments de décor de manière virtuelle. Ceci permet également de prévoir plusieurs décors possibles, les décors pouvant varier d'une représentation de l'événement à l'autre ou selon un choix du spectateur. Le spectateur peut ainsi décider de visualiser, pour un même événement, par exemple un même opéra, un décor antiquisant ou futuriste en fonction de ses goûts. L'au moins un contenu visuel ainsi affiché comprend par exemple une séquence vidéo d'au moins un acteur, par exemple d'un chanteur. Il est ainsi possible de réaliser des événements mêlant un ou des acteurs physiquement présents lors de l'événement avec la performance d'un acteur absent, mais dont le visuel est reproduit de manière efficace, éventuellement complété d'un contenu sonore associé diffusé par ailleurs lors de l'événement. Ceci permet donc d'enrichir les possibilités de représentation de l'événement en combinant des éléments et/ou des performances réel(le)s avec des éléments et/ou des performances virtuel(le)s.

L'au moins un contenu visuel ainsi affiché comprend par exemple un ou des élément(s) textuel(s). Il peut s'agir par exemple d'un texte indiquant le moment de l'événement. Alternativement, dans le cas d'une pluralité de scènes, par exemple lors de festivals il peut être possible d'identifier chaque scène par un texte fixe identifiant la scène et où l'événement ayant actuellement lieu sur cette scène.

L'étape (c) peut être mise en oeuvre de telle sorte qu'au moins un, par exemple plusieurs, du contenu visuel identifié, par exemple des contenus visuels identifiés, est ou sont affiché(s) sur l'écran 15 de manière fixe par rapport à la partie de scène et/ou par rapport à un acteur présent sur scène dans le référentiel associé au spectateur. Il est ainsi possible de présenter des informations propres à la partie de scène ou à l'acteur, par exemple le nom de l'acteur ou du personnage joué par l'acteur ou le texte dit par l'acteur, de manière efficace et aisée à suivre pour le spectateur.

L'étape (f) peut comprendre la détection de l'espace scénique à partir du capteur optique avant 161. La détection de l'espace scénique comprend par exemple la détection d'une zone moins sombre dans un espace globalement plus sombre ou d'une zone lumineuse dans un espace globalement moins lumineux.

La détection de l'espace scénique comprend par exemple le passage de la couleur du flux vidéo issu du capteur optique avant 161 en nuances de gris. La détection de l'espace scénique comprend par exemple l'application d'un filtre gaussien ou équivalent sur un flux vidéo issu du capteur optique avant 161. Ceci permet de diminuer les effets de bruit du capteur, par exemple les zones de dépassement de ses seuils de tolérance. Ceci est d'autant plus important que la qualité de la mesure du capteur optique est basse. La détection de l'espace scénique comprend par exemple l'application d'un autre filtre pour calculer une valeur moyenne d'exposition sur des zones élémentaires de taille prédéterminée, par exemple de l'ordre de quelques pixels, puis la définition de zones contrastées du flux vidéo à partir des valeurs moyennes ainsi calculées, par exemple par comparaison par rapport aux valeurs moyennes de sorte à obtenir un résultat binaire. Il est ainsi possible de détecter la scène qui, en général lors d'un événement, est la zone la plus visible. La détection de l'espace scénique comprend par exemple la détection d'un contour des zones contrastées, par exemple pour leur donner une forme polygonale simple, par exemple présentant un nombre de faces inférieur ou égal à dix, par exemple un rectangle. La détection de l'espace scénique comprend par exemple la transformation des coordonnées du polygone ainsi obtenu sur le flux vidéo vers des coordonnées en propres à l'écran 15. Les coordonnées en flux vidéo sont par exemple corrigées d'un facteur de zoom prédéterminé qui correspond par exemple au ratio de compression entre la taille réelle de l'espace scénique et la taille apparente de l'espace scénique à travers l'écran 15. Cette correction peut être suivie d'une translation permettant de recentrer l'image par rapport à l'écran 15. Il est ainsi possible de repérer l'espace scénique tel que visualisé par le spectateur. L'acquisition et/ou le traitement de flux vidéo est par exemple réalisé en utilisant la bibliothèque logicielle OpenCV ou une autre bibliothèque du même type.

L'étape (f) peut comprendre la détection de l'espace scénique par un réseau GPS, par exemple en utilisant le signal GPS naturel s'il est disponible et/ou en utilisant un réseau GPS interne. L'étape (f) peut ainsi comprendre la détermination d'une position absolue de l'espace scénique.

L'étape (f) peut comprendre la détection de l'espace scénique et/ou d'un élément de l'espace scénique et/ou d'un élément présent dans l'espace scénique en détectant la position d'une puce de communication en champ proche, par exemple une puce de type RFID. Il est ainsi possible de déterminer aisément la position de différents objets ou personnes en implantant une ou plusieurs telles puces. L'étape (f) peut en outre comprendre le calcul de la distance entre le dispositif de visualisation 10 et une telle puce, l'étape (c) d'affichage étant réalisée de telle sorte qu'au moins un paramètre d'affichage dépend de la distance ainsi calculée. Par exemple, il est possible d'ajuster la taille de l'affichage à un ratio de lisibilité prédéterminé.

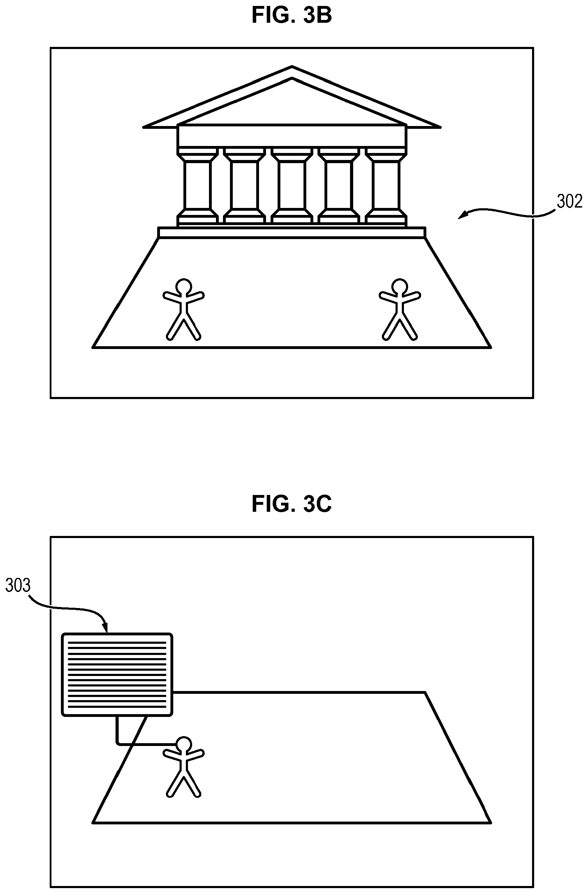

La figure 3A illustre schématiquement une partie du champ de vision d'un spectateur portant le dispositif de visualisation 10 sans affichage, c'est-à-dire que le spectateur voit uniquement l'espace scénique 301 par transparence de l'écran 15. La figure 3B illustre schématiquement une partie du champ de vision d'un spectateur portant le dispositif de visualisation 10 où un élément de décor 302 est affiché de sorte à être fixe par rapport à l'espace scénique 302. La figure 3C illustre schématiquement une partie du champ de vision d'un spectateur portant le dispositif de visualisation 10 dans lequel le spectateur voit des informations 303 relatives à l'un des chanteurs fixes par rapport à la puce de communication en champ proche portée par le chanteur.

### Mise en œuvre d'un dispositif de contrôle

En référence à la figure 8, le procédé peut mettre en oeuvre un dispositif de contrôle 20 tel que décrit précédemment, par exemple comprenant une interface d'entrée/sortie 21. Un tel dispositif de contrôle 20 permet au spectateur de commander et/ou d'interagir de manière plus efficace durant l'événement, par exemple de commander plus aisément le dispositif de visualisation 10.

Le dispositif de contrôle 20 est par exemple associé au dispositif de visualisation 10. Dans le cas d'une pluralité de dispositifs de visualisations 10, un dispositif de contrôle 20 peut être associé de manière unique à chaque dispositif de visualisation 10. Il est ainsi plus aisé de mettre en oeuvre des binômes de dispositif de visualisation 10 et de dispositif de contrôle 20.

Le dispositif de contrôle 20 est par exemple en communication avec le dispositif de visualisation 10 associé.

La communication est par exemple sans fil, ce qui permet d'accroitre la maniabilité du dispositif de visualisation 10 et du dispositif de contrôle 20 et simplifie la réalisation du système. La transmission est par exemple réalisée via un réseau local, ce qui permet de mettre en oeuvre une communication dans des endroits, tels que certaines salles de concert, où il est difficile ou impossible de capter les réseaux sans fil extérieurs. La transmission est par exemple réalisée via le réseau local 30.

### Association du dispositif de visualisation et du dispositif de contrôle

Le procédé peut comprendre une étape d'association du dispositif de visualisation 10 et du dispositif de contrôle 20.

L'association comprend par exemple la lecture d'un marqueur de communication en champ proche du dispositif de visualisation 10 par un lecteur. L'association peut comprendre, en réponse à la lecture, l'identification du dispositif de visualisation 10 au moyen d'un identifiant, cette identification étant par exemple mise en oeuvre par le réseau local 30.

L'association comprend par exemple une étape de détection d'un dispositif de contrôle 20 non encore associé, et son association au dispositif de visualisation 10, par exemple par le réseau local 30. L'association comprend par exemple l'association de l'identifiant du dispositif de visualisation 10 avec un identifiant du dispositif de contrôle 20, l'identifiant du dispositif de contrôle 20 comprenant par exemple une adresse du dispositif de contrôle 20, par exemple son adresse MAC.

### Sélection d'au moins un type de contenu à afficher

Le procédé peut comprendre une étape (g) de détection d'un signal d'entrée issu d'une interface de communication du dispositif de contrôle et/ou du dispositif de visualisation. L'interface de communication comprend par exemple l'interface d'entrée/sortie 11 et/ou 21. Il est ainsi possible de prendre en compte une instruction du spectateur.

Le procédé peut comprendre en outre au moins une étape (h) de sélection d'au moins un type de contenu à afficher parmi une liste de types de contenus possibles en fonction du signal d'entrée détecté, par exemple plusieurs types de contenus à afficher. Le spectateur peut ainsi choisir les contenus qui sont d'intérêt pour lui. Les différents types de contenus comprennent par exemple des textes dans différentes langues et/ou des éléments lisibles correspondant aux prestations de différents acteurs.

L'étape (h) peut être mise en oeuvre de sorte que l'au moins un contenu visuel, par exemple les contenus visuels, identifié(s) à l'étape (b) et/ou affiché(s) à l'étape (c), est un contenu de l'au moins un type sélectionné, par exemple des types sélectionnés, parmi tous les contenus visuels associés au moment déterminé. Les possibilités d'affichage peuvent donc être importantes sans pour autant nuire à la visibilité de l'événement, le spectateur choisissant le contenu qui est pertinent pour lui, par exemple le texte dans la langue originale et celui traduit dans sa langue maternelle. En particulier, il est possible de stocker un grand nombre de traductions et de contenus permettant une meilleure compréhension de l'événement, par exemple dans les moyens de stockage de données 21 du dispositif de visualisation, le spectateur pouvant choisir celle ou ceux qu'il veut afficher dans son champ de vision.

L'étape (h) peut comprendre la détermination du dépassement du nombre de types à afficher simultanément par rapport à une taille maximale, et l'émission d'un message d'erreur en cas de dépassement, le message d'erreur étant par exemple affiché par le dispositif de contrôle 20 et/ou par le dispositif de visualisation 10. Il est ainsi possible de gérer le nombre de type de contenus à afficher. La détermination du dépassement peut comprendre la détermination d'une valeur d'un compteur de taille, la valeur étant comparée à une valeur de taille maximale. La taille maximale peut être définie comme un nombre de type maximal à afficher, dans quel cas la valeur du compteur est déterminée comme étant le nombre de types demandés par le spectateur. Alternativement, la taille maximale et le compteur peuvent prendre en compte la place relative des types à afficher par rapport au haut de l'écran. Il est ainsi possible de définir une norme de confort pour le spectateur.

L'étape (h) peut comprendre une étape de répartition des types d'affichage sur l'écran 15. Il est ainsi possible d'optimiser le confort de l'utilisateur.

Alternativement ou en complément, l'étape (h) peut comprendre la sélection d'au moins une zone d'affichage pour un type de contenu à afficher parmi une liste de zones possibles en fonction du signal d'entrée détecté. Le spectateur peut ainsi choisir la zone de l'écran 15 au niveau de laquelle il souhaite que le contenu soit affiché.

### Détermination de contenu à partager

En référence à la figure 9, le procédé peut mettre en œuvre un dispositif de contrôle 20 tel que décrit précédemment, par exemple comprenant une interface d'entrée/sortie 21.

Le procédé peut comprendre une étape (g) de détection d'un signal d'entrée issu d'une interface de communication du dispositif de contrôle et/ou du dispositif de visualisation. L'interface de communication comprend par exemple l'interface d'entrée/sortie 11 et/ou 21. Il est ainsi possible de prendre en compte une instruction du spectateur.

Le procédé peut comprendre une étape (i) de détermination d'au moins un contenu à partager en fonction du signal d'entrée détecté, par exemple de plusieurs contenus à partager en fonction du signal d'entrée détecté. Il est ainsi possible pour le spectateur de partager un contenu durant l'événement, par des moyens fixés par l'organisateur de l'événement de sorte à ne pas troubler l'événement, par exemple en choisissant un dispositif de contrôle et fixant les paramètres d'affichage associés de sorte à ce qu'il provoque peu de pollution lumineuse et/ou peu de pollution sonore.

En outre, les modalités de composition du contenu à partager peuvent être fixées de sorte à prédéterminer la composition du contenu.

L'étape (i) peut également comprendre la transmission des contenus à partager à un réseau distant tel qu'internet, par exemple par l'intermédiaire du réseau local. Par exemple, le routeur 31 peut être un boitier d'accès à internet de type « box ».

Il est ainsi possible de mettre en oeuvre une communication, notamment via des sites internet permettant de partage d'informations tels que des réseaux sociaux, dans des lieux qui ne permettent pas une telle connexion, soit parce que l'endroit où a lieu l'événement ne permet pas de capter de réseau extérieur, soit parce que l'utilisation des dispositifs de communication personnels, par exemple le téléphone portable du spectateur, est interdite.

L'étape (i) comprend ainsi le partage sur un réseau social des contenus à partager. Le partage est par exemple réalisé par un compte spécifique du réseau social commun à plusieurs dispositifs de contrôle et/ou dispositifs de visualisation, par exemple à tous les dispositifs de contrôle et/ou dispositifs de visualisation activés comme décrit ci-après. Alternativement ou en complément, le partage est par exemple réalisé par un compte spécifique du réseau social propre au dispositif de contrôle et/ou au dispositif de visualisation, par exemple correspondant aux données d'identification et/ou d'authentification fournies lors de l'étape d'activation décrite ci-après.

Le contenu à partager peut comprendre des données relatives à l'événement, par exemple un nom de l'événement. Le contenu à partager peut comprendre des données relatives au moment identifié et/ou au type de contenu à partager sélectionné, par exemple le contenu à partager correspondant au moment identifié, par exemple une partition et/ou des paroles, par exemple un nom de compositeur, par exemple un nom de scène ou de morceau.

### Sélection d'au moins une commande à réaliser

Le procédé peut comprendre une étape (j) de détection d'un signal d'entrée issu d'une interface de communication du dispositif de contrôle et/ou du dispositif de visualisation. L'interface de communication comprend par exemple l'interface d'entrée/sortie 11 et/ou 21. Il est ainsi possible de prendre en compte une instruction du spectateur relative à un objet à commander. L'objet à commander est par exemple un objet en vente par ce moyen, par exemple de la nourriture, par exemple une boisson, par exemple un livre.

Le procédé peut comprendre en outre au moins une étape (k) de sélection d'au moins un objet à commander parmi une liste d'objets possibles en fonction du signal d'entrée détecté, par exemple plusieurs aliments. Le spectateur peut ainsi choisir les objets qui sont d'intérêt pour lui.

L'étape (k) peut également comprendre la transmission de l'objet à commander à un réseau distant tel qu'internet, par exemple par l'intermédiaire du réseau local. Par exemple, le routeur 31 peut être un boitier d'accès à internet de type « box ».

Il est ainsi possible de mettre en oeuvre une communication, notamment via des sites internet permettant de partage d'informations tels que des réseaux sociaux, dans des lieux qui ne permettent pas une telle connexion, soit parce que l'endroit où a lieu l'événement ne permet pas de capter de réseau extérieur, soit parce que l'utilisation des dispositifs de communication personnels, par exemple le téléphone portable du spectateur, est interdite. Il est ainsi possible de commander des objets au cours de l'événement et de les chercher ou de les recevoir pendant ou après l'événement, par exemple au cours d'un entracte ou à la fin du spectacle. En effet les commandes sont ainsi prises en compte dès leur émission et les objets ou les services commandés peuvent être disponibles dès l'entracte. Il en résulte une logistique plus aisée à mettre en œuvre. Le partage est par exemple réalisé sur un compte d'un réseau social, par exemple tweeter, disposant d'un accès limités de sorte à limiter la transmission d'information à des personnes participant à la mise en oeuvre ou à l'organisation de l'événement.

### Activation du dispositif de visualisation et/ou du dispositif de contrôle

Le procédé peut comprendre une étape d'activation du dispositif de visualisation 10 et du dispositif de contrôle 20.

L'étape d'activation est par exemple réalisée en même temps que l'étape d'association du dispositif de visualisation 10 et du dispositif de contrôle 20.

L'étape d'activation comprend par exemple la lecture d'un marqueur de communication en champ proche du dispositif de visualisation 10 par un lecteur. Le lecteur est par exemple associé et/ou communique et/ou comprend et/ou est et/ou forme des moyens d'affichage de données d'activation et/ou d'entrée de données d'activation. Les moyens de visualisation de données et/ou d'entrée de données, peuvent être ou comprendre un terminal et/ou un bouton et/ou un capteur tactile et/ou une tablette, par exemple une tablette tactile.

L'étape d'activation comprend, par exemple en même temps ou postérieurement à la lecture, une validation par entrée au niveau des moyens d'affichage de données d'activation et/ou d'entrée de données d'activation. La validation est par exemple réalisée en même temps et/ou postérieurement à un affichage de conditions de validations, comprenant par exemple l'affichage de conditions générales de vente. La validation peut comprendre l'entrée de données d'identification et/ou d'authentification, par exemple d'identification à un ou plusieurs réseaux sociaux, ces données d'identification et/ou d'authentification étant par exemple ensuite transmises et/ou associées au dispositif de visualisation 10 et/ou au dispositif de contrôle 20. Les données d'identification et/ou d'authentification sont par exemple stockées sur une mémoire.

Le procédé peut comprendre une étape de désactivation du dispositif de visualisation 10 et du dispositif de contrôle 20.

L'étape de désactivation comprend par exemple la lecture d'un marqueur de communication en champ proche du dispositif de visualisation 10 par un lecteur. Le lecteur est par exemple associé et/ou communique et/ou comprend et/ou est et/ou forme des moyens d'affichage de données d'activation et/ou d'entrée de données d'activation. Les moyens de visualisation de données et/ou d'entrée de données, peuvent être ou comprendre un terminal et/ou un bouton et/ou un capteur tactile et/ou une tablette, par exemple une tablette tactile.

L'étape de désactivation comprend, par exemple en même temps ou postérieurement à la lecture, l'effacement total ou partiel des données d'identification et/ou d'authentification, par exemple d'identification à un ou plusieurs réseaux sociaux stockées.

### Affichage du dispositif de contrôle

Le dispositif de contrôle et/ou un autre dispositif portatif, par exemple un téléphone portable, est par exemple configuré pour permettre l'affichage de données, par exemple au même moment ou en réponse aux mêmes actions. Le dispositif de contrôle et/ou un autre dispositif portatif peut par exemple afficher les contenus visuels, par exemple les contenus identifiés.

Ainsi, alternativement ou en complément de l'étape (c) déjà décrite, l'étape (c) peut comprendre l'affichage par le dispositif de contrôle et/ou un autre dispositif portatif dudit au moins un contenu visuel identifié.

## Revendications

1. Procédé de visualisation de données relatives à un événement par au moins un spectateur portant un dispositif de visualisation (10) équipé d'un écran (15) au moins partiellement transparent, l'événement comprenant plusieurs moments successifs prédéterminés, un ensemble de contenus visuels chacun associé à un desdits moments successifs étant stocké dans des moyens de stockage de données (12, 22, 42) le procédé comprenant la mise
en œuvre par des moyens de traitement de données (13, 23, 43) d'étapes de :
(a) Détermination d'un moment en cours,
(b) Identification dans ledit ensemble de l'au moins un contenu visuel associé au moment en cours,
(c) Affichage par ledit écran (15) du dispositif de visualisation dudit au moins un contenu visuel identifié,
le procédé étant **caractérisé en ce qu'**il comprend en outre une étape de:
(f) Détermination de la position relative d'une part d'un espace scénique (201, 301) où se déroule l'événement ou d'un élément de l'espace scénique et d'autre part du dispositif de visualisation (10),
l'étape (f) étant répétée à une fréquence donnée,
l'étape (c) étant mise en œuvre de telle sorte que l'au moins un contenu identifié soit affiché en se déplaçant sur l'écran (15) en fonction de la position relative déterminée.

2. Procédé selon la revendication 1, dans les moyens de traitement de données sont des moyens de traitement de données (13) du dispositif de visualisation (10) et les moyens de stockage de données sont des moyens de stockage de données (12) du dispositif de visualisation (10).

3. Procédé selon la revendication 1, dans lequel l'étape (a) est mise en œuvre par des moyens de traitement de données (43) d'un terminal de commande (40).

4. Procédé selon la revendication 3, dans lequel l'étape (b) est mise en œuvre par les moyens de traitement de données (43) du terminal de commande, les moyens de stockage de données étant des moyens de stockage de données (42) du terminal de commande, le procédé comprenant en outre une étape de :
(d) transmission de l'au moins un contenu visuel identifié au dispositif de visualisation (10), la transmission étant réalisée par une communication sans fil, la transmission étant réalisée via un réseau local.

5. Procédé selon la revendication 3, dans lequel le procédé comprend en outre une étape de :
(e) transmission du moment déterminé au dispositif de visualisation (10), l'étape (b) étant mise en œuvre par des moyens de traitement de données (13) du dispositif de visualisation, les moyens de stockage de données étant des moyens de stockage de données (12) du dispositif de visualisation.

6. Procédé selon l'une des revendications précédentes, dans lequel l'au moins un contenu visuel identifié comprend une partition de musique à afficher et/ou un élément de décor à afficher.

7. Procédé selon l'une des revendications précédentes, dans lequel ladite fréquence donnée est de l'ordre de plusieurs Hz, par exemple supérieure à 10 Hz, par exemple supérieure à 15 Hz, par exemple supérieure à 20 Hz.

8. Procédé selon l'une des revendications précédentes, dans lequel un dispositif de contrôle (20) comprenant une interface d'entrée/sortie (21) est associé à chaque dispositif de visualisation (10), le dispositif de contrôle étant en communication avec le dispositif de visualisation, et dans lequel :
- le procédé comprend une étape de :
(g) détection d'un signal d'entrée issu de l'interface d'entrée/sortie,
- le procédé comprenant en outre au moins une étape de :
(h) sélection d'au moins un type de contenu à afficher parmi une liste de types de contenus possibles en fonction du signal d'entrée détecté de sorte que l'au moins un contenu visuel identifié à l'étape (b) et/ou affiché à l'étape (c) est un contenu de l'au moins un type sélectionné parmi l'au moins un contenu visuel associé au moment déterminé, et/ou
(i) détermination d'au moins un contenu à partager en fonction du signal d'entrée détecté et transmission de l'au moins un contenu à partager à un réseau distant par l'intermédiaire d'un réseau local.

9. Procédé selon la revendication 8, comprenant une étape (j) de détection d'un signal d'entrée issu d'une interface de communication du dispositif de contrôle et/ou du dispositif de visualisation, le procédé comprenant en outre une étape (k) de sélection d'au moins un objet à commander, par exemple un objet en vente, parmi une liste d'objets possibles en fonction du signal d'entrée détecté, l'étape (k) comprenant la transmission de la commande de l'objet à un réseau distant, par exemple par l'intermédiaire du réseau local.

10. Procédé selon la revendication 8, comprenant une étape d'activation du dispositif de visualisation (10) et du dispositif de contrôle (20), réalisée en même temps que l'étape d'association du dispositif de visualisation (10) et du dispositif de contrôle (20), l'étape d'activation comprenant la lecture d'un marqueur de communication en champ proche du dispositif de visualisation (10) par un lecteur, le lecteur étant associé et/ou communiquant et/ou comprenant et/ou étant et/ou formant des moyens d'affichage de données d'activation et/ou d'entrée de données d'activation, l'étape d'activation comprenant, en même temps ou postérieurement à la lecture, une validation par entrée au niveau des moyens d'affichage de données d'activation et/ou d'entrée de données d'activation, réalisée en même temps et/ou postérieurement à un affichage de conditions de validations, la validation comprenant l'entrée de données d'identification et/ou d'authentification, les données d'identification et/ou d'authentification étant ensuite transmises et/ou associées au dispositif de visualisation (10) et/ou au dispositif de contrôle (20).

11. Procédé selon la revendication 10, comprenant une étape de désactivation du dispositif de visualisation (10) et du dispositif de contrôle (20), l'étape de désactivation comprenant la lecture d'un marqueur de communication en champ proche du dispositif de visualisation (10) par ledit lecteur, l'étape de désactivation comprenant, en même temps ou postérieurement à la lecture, l'effacement total ou partiel des données d'identification et/ou d'authentification.

12. Procédé selon l'une des revendications 8 à 11, dans lequel l'étape (c) comprend l'affichage par le dispositif de contrôle et/ou un autre dispositif portatif dudit au moins un contenu visuel identifié.

13. Procédé selon l'une quelconque des revendications précédentes, dans lequel le procédé comprend une étape de réception d'un signal d'entrée issu de moyens de mesures, les moyens de mesures comprenant au moins un capteur sonore (17, 27, 47), et/ou les moyens de mesures comprenant au moins un capteur optique (16, 161, 162, 46), la détermination étant réalisée en fonction du signal d'entrée ainsi mesuré, l'étape de détermination comprenant une étape de reconnaissance du signal d'entrée, par exemple par comparaison avec un signal de référence.

14. Procédé selon l'une quelconque des revendications précédentes, dans lequel l'au moins un contenu visuel comprend des notes de musiques jouées lors du moment déterminé ou du moment suivant.

15. Système de visualisation de données relatives à un événement par au moins un spectateur, le système étant configuré pour mettre en œuvre le procédé selon l'une des revendications 1 à 12.

16. Moyens de stockage lisibles par un équipement informatique sur lesquels un produit programme d'ordinateur comprend des instructions de code pour l'exécution d'un procédé selon l'une des revendications 1 à 12.

## Patentansprüche

1. Verfahren zum Visualisieren von Daten im Zusammenhang mit einem Ereignis durch mindestens einen Zuschauer, der eine Visualisierungsvorrichtung (10) trägt, die mit einem mindestens teilweise transparenten Bildschirm (15) ausgestattet ist, wobei das Ereignis mehrere vorher festgelegte aufeinanderfolgende Momente umfasst, wobei eine Einheit visueller Inhalte, von denen jeder einem der aufeinanderfolgenden Momente zugeordnet ist, in Datenspeichermitteln (12, 22, 42) gespeichert ist, wobei das Verfahren die Durchführung durch Datenverarbeitungsmittel (13, 23, 43) folgender Schritte umfasst:
(a) Bestimmen eines laufenden Moments,
(b) Identifizieren, in der Einheit, des mindestens einen visuellen Inhalts, der dem laufenden Moment zugeordnet ist,
(c) Anzeigen, durch den Bildschirm (15) der Visualisierungsvorrichtung, des mindestens einen identifizierten visuellen Inhalts,
wobei das Verfahren **dadurch gekennzeichnet ist, dass** es ferner einen Schritt umfasst:
(f) Bestimmen der relativen Position zum einen eines szenischen Raums (201, 301), wo das Ereignis stattfindet oder eines Elements des szenischen Raums und zum anderen der Visualisierungsvorrichtung (10),
wobei der Schritt (f) in einer gegebenen Frequenz wiederholt wird,
wobei der Schritt (c) derart durchgeführt wird, dass der mindestens eine identifizierte Inhalt angezeigt wird, indem er sich auf dem Bildschirm (15) in Abhängigkeit von der bestimmten relativen Position verlagert.

2. Verfahren nach Anspruch 1, wobei die Datenverarbeitungsmittel Datenverarbeitungsmittel (13) der Visualisierungsvorrichtung (10) sind und die Datenspeichermittel Datenspeichermittel (12) der Visualisierungsvorrichtung (10) sind.

3. Verfahren nach Anspruch 1, wobei der Schritt (a) von den Datenverarbeitungsmittel (43) eines Steuerendgeräts (40) durchgeführt wird.

4. Verfahren nach Anspruch 3, wobei der Schritt (b) von den Datenverarbeitungsmitteln (43) des Steuerendgeräts durchgeführt wird, wobei die Datenspeichermittel Datenspeichermittel (42) des Steuerendgeräts sind, wobei das Verfahren ferner einen Schritt umfasst:
(d) Übertragen des mindestens einen identifizierten visuellen Inhalts an die Visualisierungsvorrichtung (10), wobei die Übertragung durch eine drahtlose Kommunikation erfolgt, wobei die Übertragung über ein lokales Netzwerk erfolgt.

5. Verfahren nach Anspruch 3, wobei das Verfahren ferner einen Schritt umfasst:
(e) Übertragen des bestimmten Moments an die Visualisierungsvorrichtung (10),
wobei der Schritt (b) von Datenverarbeitungsmitteln (13) der Visualisierungsvorrichtung durchgeführt wird, wobei die Datenspeichermittel Datenspeichermittel (12) der Visualisierungsvorrichtung sind.

6. Verfahren nach einem der vorangehenden Ansprüche, wobei der mindestens eine identifizierte visuelle Inhalt eine anzuzeigende Musikpartitur und/oder ein anzuzeigendes Dekorelement umfasst.

7. Verfahren nach einem der vorangehenden Ansprüche, wobei die gegebene Frequenz in der Größenordnung von mehreren Hz liegt, beispielsweise über 10 Hz, beispielsweise über 15 Hz, beispielsweise über 20 Hz.

8. Verfahren nach einem der vorangehenden Ansprüche, wobei eine Kotrollvorrichtung (20), die eine Eingangs-/Ausgangs-Schnittstelle (21) umfasst, jeder Visualisierungsvorrichtung (10) zugeordnet ist, wobei die Kotrollvorrichtung mit der Visualisierungsvorrichtung in Kommunikation ist, und wobei:
- das Verfahren einen Schritt umfasst:
(g) Ermittelns eines von der Eingangs-/Ausgangs-Schnittstelle ausgehenden Eingangssignals,
- wobei das Verfahren ferner mindestens einen Schritt umfasst:
(h) Auswählens mindestens eines Typs anzuzeigenden Inhalts aus einer Liste von Typen möglicher Inhalte in Abhängigkeit vom ermittelten Eingangssignal, so dass der mindestens eine in Schritt (b) identifizierte und/oder in Schritt (c) angezeigte visuelle Inhalt ein Inhalt des mindestens einen Typs ist, der aus dem mindestens einen visuellen Inhalt ausgewählt ist, der dem bestimmten Moment zugeordnet ist, und/oder
(i) Bestimmen des mindestens einen in Abhängigkeit vom ermittelten Eingangssignal zu teilenden Inhalts und Übertragen des mindestens einen zu teilenden Inhalts an ein entferntes Netzwerk über ein lokales Netzwerk.

9. Verfahren nach Anspruch 8, umfassend einen Schritt (j) des Ermittelns eines von einer Kommunikationsschnittstelle der Kontrollvorrichtung und/oder der Visualisierungsvorrichtung ausgehenden Eingangssignals, wobei das Verfahren ferner einen Schritt (k) des Auswählens mindestens eines zu steuernden Objekts, beispielsweise eines Verkaufsobjekts, aus einer Liste möglicher Objekte in Abhängigkeit vom ermittelten Eingangssignal umfasst, wobei der Schritt (k) die Übertragung der Steuerung des Objekts an ein entferntes Netzwerk, beispielsweise über das lokale Netzwerk, umfasst.

10. Verfahren nach Anspruch 8, umfassend einen Aktivierungsschritt der Visualisierungsvorrichtung (10) und der Kontrollvorrichtung (20), der gleichzeitig wie der Zuordnungsschritt der Visualisierungsvorrichtung (10) und der Kontrollvorrichtung (20) durchgeführt wird, wobei der Aktivierungsschritt das Lesen eines Kommunikationsmarkers im Nahfeld der Visualisierungsvorrichtung (10) durch ein Lesegerät umfasst, wobei das Lesegerät den Anzeigemitteln von Aktivierungsdaten und/oder Eingangsmitteln von Aktivierungsdaten zugeordnet ist und/oder kommuniziert und/oder umfasst und/oder ist und/oder bildet,
wobei der Aktivierungsschritt umfasst, gleichzeitig oder nach dem Lesen, eine Validierung durch Eingang, im Bereich der Anzeigemittel, von Aktivierungsdaten und/oder Eingang von Aktivierungsdaten, die gleichzeitig und/oder nach einer Anzeige von Validierungsbedingungen durchgeführt, wobei die Validierung den Eingang von Identifizierungs- und/oder Authentifizierungsdaten umfasst, wobei die Identifizierungs- und/oder Authentifizierungsdaten dann an die Visualisierungsvorrichtung (10) und/oder an die Kontrollvorrichtung (20) übertragen und/oder zugeordnet werden.

11. Verfahren nach Anspruch 10, umfassend einen Deaktivierungsschritt der Visualisierungsvorrichtung (10) und der Kontrollvorrichtung (20), wobei der Deaktivierungsschritt das Lesen eines Kommunikationsmarkers im Nahfeld der Visualisierungsvorrichtung (10) durch das Lesegerät umfasst, wobei der Deaktivierungsschritt gleichzeitig oder nach dem Lesen das vollständige oder teilweise Löschen der Identifizierungs- und/oder Authentifizierungsdaten umfasst.

12. Verfahren nach einem der Ansprüche 8 bis 11, wobei der Schritt (c) das Anzeigen, durch die Kontrollvorrichtung und/oder eine andere tragbare Vorrichtung, des mindestens einen identifizierten visuellen Inhalts umfasst.

13. Verfahren nach einem der vorangehenden Ansprüche, wobei das Verfahren einen Empfangsschritt eines von Messmitteln ausgehenden Eingangssignals umfasst, wobei die Messmittel mindestens einen akustischen Sensor (17, 27, 47) umfassen und/oder die Messmittel mindestens einen optischen Sensor (16, 161, 162, 46) umfassen, wobei die Bestimmung in Abhängigkeit von dem derart gemessenen Eingangssignal durchgeführt wird, wobei der Bestimmungsschritt einen Wiedererkennungsschritt des Eingangssignals, beispielsweise durch Vergleich mit einem Referenzsignal, umfasst.

14. Verfahren nach einem der vorangehenden Ansprüche, wobei der mindestens eine visuelle Inhalt Musiknoten umfasst, die während des bestimmten Moments oder des folgenden Moments gespielt werden.

15. System zur Visualisierung von Daten im Zusammenhang mit einem Ereignis durch mindestens einen Zuschauer, wobei das System ausgelegt ist, um das Verfahren nach einem der Ansprüche 1 bis 12 durchzuführen.

16. Speichermittel, die von einer IT-Ausrüstung lesbar sind, auf denen ein Rechnerprogrammprodukt Codebefehle für die Ausführung eines Verfahrens nach einem der Ansprüche 1 bis 12 umfasst.

## Claims

1. A method for visualizing data relating to an event, by at least one spectator wearing a display device (10) equipped with a screen (15) that is at least partly transparent, the event comprising several predetermined successive moments, a set of visual contents each associated with one of said successive moments being stored in data storage means (12, 22, 42), the method comprising the implementation by data processing means (13, 23, 43) of steps of:
(a) determining a moment in progress,
(b) identifying, in said set, the at least one visual content associated with the moment in progress,
(c) displaying said at least one identified visual content by said screen (15) of the display device,
the method being **characterized in that** it further comprises a step of:
(f) determining the relative position first of a performance space (201, 301) where the event is taking place or of an element of the performance space, and secondly of the display device (10),
step (f) being repeated at a given frequency,
step (c) being implemented so that the at least one identified content is displayed on the screen (15) as a function of the determined relative position.

2. The method according to claim 1, wherein the data processing means are data processing means (13) of the display device (10) and the data storage means are data storage means (12) of the display device (10).

3. The method according to claim 1, wherein step (a) is implemented by data processing means (43) of a control terminal (40).

4. The method according to claim 3, wherein step (b) is implemented by the data processing means (43) of the control terminal, the data storage means being data storage means (42) of the control terminal, the method further comprising a step of:
(d) transmitting the at least one identified visual content to the display device (10), the transmission being made by a wireless communication, the transmission being made over a local network.

5. The method according to claim 3, wherein the method further comprises a step of:
(e) transmitting the determined moment to the display device (10),
step (b) being implemented by data processing means (13) of the display device, the data storage means being data storage means (12) of the display device.

6. The method according to one of the preceding claims, wherein the at least one identified visual content comprises a music score to be displayed and/or a scenery element to be displayed.

7. The method according to one of the preceding claims, wherein said given frequency is in the order of several Hz, e.g. higher than 10 Hz, e.g. higher than 15 Hz, for example higher than 20 Hz.

8. The method according to one of the preceding claims, wherein a control device (20) comprising an input/output interface (21) is associated with each display device (10), the control device being in communication with the display device, and wherein:
- the method comprises a step of:
(g) detecting an input signal from the input/output interface,
- the method further comprising at least a step of:
(h) selecting at least one type of content to be displayed from a list of possible types of contents as a function of the detected input signal so that the at least one visual content identified at step (b) and/or displayed at step (c) is a content of the at least one type selected from among the at least one visual content associated with the determined moment, and/or
(i) determining at least one content to be shared as a function of the detected input signal and transmitting the at least one content to be shared to a remote network via a local network.

9. The method according to claim 8, comprising a step (j) of detecting an input signal from a communication interface of the control device and/or display device, the method further comprising a step (k) of selecting at least one object to be ordered, for example an object on sale, from a list of possible objects as a function of the detected input signal, step (k) comprising transmission of the order of the object to a remote network e.g. via the local network.

10. The method according to claim 8, comprising a step of activating the display device (10) and control device (20), performed at the same time as the step of associating the display device (10) with the control device (20), the activation step comprising reading of a near field communication marker of the display device (10) by a reader, the reader being associated with and/or communicating with and/or comprising and/or being and/or forming means to display activation data and/or to enter activation data,
the activation step comprising,
at the same time of reading or after reading, validation via an input into the activation data display means and/or activation data entry means, made at the same time as and/or after display of validation conditions, the validation comprising the entry of identification and/or authentication data, the identification and/or authentication data for example then being transmitted to and/or associated with the display device (10) and/or control device (20).

11. The method according to claim 10, comprising a step of deactivating the display device (10) and control device (20), the deactivation step comprising the reading of a near field communication marker of the display device (10) by said reader, the deactivation step comprising, at the same time as or after reading, the erasing of all or part of the identification and/or authentication data.

12. The method according to one of claims 8 to 11, wherein step (c) comprises the display by the control device and/or other portable device of said at least one identified visual content.

13. The method according to one of the preceding claims, wherein the method comprises a step of receiving an input signal from measuring means, the measuring means comprising at least one sound sensor (17, 27, 47), and/or the measuring means comprising at least one optical sensor (16, 161, 162, 46), the determination then being carried out as a function of the input signal thus measured, the determination step comprising a recognition step of the input signal e.g. by comparison with a reference signal.

14. The method according to one of the preceding claims, wherein the at least one visual content comprises music notes played at the determined moment or at the following moment.

15. A system for visualizing data relating to an event, by at least one spectator, the system being configured to implement the method according to one of claims 1 to 12.

16. Storage means readable by a computing equipment in which a computer program product comprises code instructions to execute a method according to one of claims 1 to 12.
